**Europäisches Patentamt**

**European Patent Office**

**Office européen des brevets**

(11) Numéro de publication: **0 000 070**
**B1**

(12) **FASCICULE DE BREVET EUROPEEN**

(45) Date de publication du fascicule de brevet:
**18.02.81**

(21) Numéro de dépôt: **78100129.2**

(22) Date de dépôt: **08.06.78**

(51) Int. Cl.³: **H 04 N 1/032,** G 01 D 15/06,
B 41 J 3/20, G 03 G 17/00

(54) Barrette d'impression d'une image.

(30) Priorité: **13.06.77 FR 7718012**

(43) Date de publication de la demande:
**20.12.78 Bulletin 78/1**

(45) Mention de la délivrance du brevet:
**18.02.81 Bulletin 81/7**

(84) Etats contractants désignés:
**BE DE FR GB LU NL SE**

(56) Documents cités:
**FR-A-1 500 533**
**FR-A-2 110 322**
**GB-A-1 468 258**
**US-A-2 063 992**
**US-A-3 903 594**

**TECHNISCHE MITTEILUNGEN AEG-TELEFUNKEN**
**vol. 64, nr. 6, 1974,**
**Berlin**
**SUESSENBACH «Grundlagen eines electrosensitiven**
**Rasterdruckverfahrens» pages 193 à 197**

(73) Titulaire: **COMPAGNIE INDUSTRIELLE DES TELECOMMUNICATIONS CIT-ALCATEL S.A. dite:, 12, rue de la Baume, F-75008 Paris (FR)**

(72) Inventeur: **Yvard, Marcel, 11, rue de la Source Ollainville, F-91290 Arpajon (FR)**
Inventeur: **Decuyper, Jean-Claude, 13, allée de la Deule, F-78310 Elancourt (FR)**
Inventeur: **Beduchaud, Michel, 6, résidence de Villebon Villebon sur Yvette, F-91120 Palaiseau (FR)**

(74) Mandataire: **Weinmiller, Jürgen et al, Zeppelinstrasse 63, D-8000 München 80 (DE)**

ACTORUM AG.

Barrette d'impression d'une image

La présente invention porte sur une barrette d'impression d'une image sur un papier sensible. La barrette d'impression est, en particulier, utilisée dans un poste de reproduction de documents, appartenant à une installation de transmission de facsimilés.

Dans une installation de ce type, la restitution d'un document analysé dont le contenu est transmis au poste de reproduction est assurée par une tête ou barrette d'impression, venant balayer un papier sensible choisi selon des lignes successives. La tête ou barrette est excitée par le signal d'information reçu par le poste de reproduction et définissant le contenu de la ligne balayée pour l'impression des points d'image successifs, le long de la ligne de balayage considérée.

La formation sur le papier de points d'image, donc de points de densité variable, consiste à déclencher, par réaction, une modification localisée du papier utilisé, de manière à obtenir une variation de son aspect optique, par exemple une coloration. Le papier utilisé au poste récepteur peut donc être par exemple électro-sensible, électro-catalytique ou thermo-sensible. Le papier utilisé étant, par exemple, électro-catalytique, l'impression d'un point d'image est obtenue par application localisée sur le papier d'un stylet en matériau catalyseur choisi en fonction du papier et par passage d'un courant électrique entre le stylet et le papier; on provoque ainsi une catalyse accompagnée d'une modification de coloration du papier. Dans cet exemple, le papier peut être constitué d'une couche externe de matériau sensible, d'une sous-couche conductrice et d'un papier de base les supportant. Le stylet peut être par exemple en argent ou recouvert d'argent; il vient en appui sur la couche externe.

L'impression d'une ligne complète d'image peut être assurée par déplacement de la tête d'impression à stylet unique le long de la ligne de balayage du papier. L'impression d'une ligne complète de balayage peut aussi être obtenue par une barrette d'impression ayant autant de stylets d'impression que de points d'image dans la ligne. La barrette est statique par rapport à la ligne de balayage considérée, seul un déplacement relatif pas à pas du papier et de la barrette subsistera. La présente invention porte sur ce dernier type de barrette d'impression.

On connaît, par la publication GB-A-1 468 258, une barrette d'impression de ce dernier type dans laquelle les stylets sont adressés individuellement au moyen de matrices d'adressage à diodes à partir de deux séries de générateurs de commande. Dans les réalisations données dans ce document, la barrette comporte deux ensembles: l'un constitue une tête d'impression équipée des électrodes et de conducteurs respectifs de raccordement, l'autre constitue les matrices d'adressage des stylets à couples de composants discrets, diode et résistance, connectés respectivement à deux réseaux orthogonaux de conducteurs formant les lignes et colonnes des matrices et aboutissant à des bornes de contact pour les deux séries de générateurs de commande. La connexion électrique entre ces deux ensembles est assurée par des liaisons respectives entre les couples diode-résistance et les conducteurs de raccordement. La réalisation de cette barrette avec matrices d'adressage des stylets demeure cependant peu aisée du fait du nombre très important de liaisons à effectuer tant lors de la constitution de l'ensemble des matrices que de sa liaison électrique avec la tête d'impression.

La présente invention a pour but de réaliser une barrette d'impression du type précité avec matrices à diodes d'adressage des stylets de structure compacte dans laquelle les composants des matrices sont totalement intégrés et protégés et montés pour obtenir directement les liaisons électriques convenables.

La présente invention a pour objet une barrette d'impression d'une image sur un papier sensible, par balayage selon des lignes successives, comportant une pluralité de stylets d'impression alignés sur la longueur d'une ligne de balayage, et comportant n matrices carrées, pour l'adressage des stylets, formées par un premier réseau de conducteurs électriques isolés les uns des autres et divisés en n ensembles identiques, appelés colonnes des matrices, reliés respectivement aux stylets et alimentés à travers des résistances individuelles à partir de premières bornes d'alimentation respectivement affectées aux n matrices, et par un deuxième réseau de conducteurs électriques isolés les uns des autres, perpendiculaire au premier réseau et dont les conducteurs en nombre égal à ceux de chaque ensemble du premier réseau, appelés lignes des matrices, sont alimentés à partir de deuxième bornes d'alimentation, respectivement affectées aux lignes et sont connectés sélectivement aux colonnes par l'intermédiaire de diodes à semi-conducteur pour former lesdites n matrices, caractérisée en ce que les conducteurs électriques du premier réseau et du deuxième réseau sont constitués par des rubans conducters formés respectivement sur une première plaquette isolante et une deuxième plaquette isolante, disposés intérieurement aux plaquettes assemblées et isolés les uns des autres aux intersections entre rubans conducteurs à l'exception des connexions sélectives pour former chacune desdites matrices, et en ce que, dans chaque matrice lesdites résistances sont formées chacune par une couche de matériau résistif déposée sur l'une des plaquettes et venant relier chacune des colonnes de la matrice considérée à une même bande conductrice formée sur l'une des plaquettes, isolée des rubans de cette plaquette et liée électriquement à la première borne affectée à cette matrice, et les diodes sont formées chacune par une pastille de matériau semi-conducteur montée sur l'un des deux rubans définissant la ligne et la colonne considérées au niveau de leur intersection.

Les matrices d'adressage des stylets sont donc intégrées dans la barrette d'impression, au niveau des plaquettes portant ou incluant les stylets.

D'autres caractéristiques et avantages de la présente invention apparaîtront au cours de la description d'exemples de réalisation illustrés dans le dessin ci-annexé. Dans ce dessin:
- la fig. 1 illustre un agencement des éléments constituant une barrette d'impression selon l'invention,
- la fig. 2 représente en section la barrette d'impression illustrée dans la fig. 1,
- la fig. 3 représente en section une barrette d'impression selon une variante de réalisation par rapport à la fig. 2,
- la fig. 4 illustre à échelle très agrandie un détail de constitution de la barrette d'impression selon l'invention,
- la fig. 5 représente schématiquement un agencement préféré d'éléments de la barrette d'impression,
- la fig. 6 représente le schéma électrique de la barrette d'impression,
- la fig. 7 représente un mode de réalisation du circuit de commande de la barrete d'impression.

La barrette d'impression qui va être décrite en regard du dessin ci-annexé est destinée à l'élaboration d'une image sur un papier sensible, l'impression de l'image étant obtenue par balayage du papier selon des lignes successives et impression de points d'image successifs le long de chaque ligne. A titre d'exemple, la barrette d'impression rentre dans un ensemble de reproduction de fac-similés, elle est statique sur le plan mécanique, le papier sensible sur lequel est formée l'image défilant pas à pas, sous l'action de moyens d'entraînement connus, en regard de la barrette pour l'impression des lignes de balayage successives du papier.

A titre d'exemple, la barrette d'impression rentre dans un ensemble de reproduction de documents appartenant à une installation de transmission de fac-similés. Elle permet une définition d'image de 1728 points d'image par ligne de balayage du papier de 216 mm. Le papier choisi est du type électro-catalytique présentant, de manière générale, une très grande sensibilité, c'est-à-dire ne nécessitant qu'une faible énergie pour son impression. Ce papier sera, par exemple, d'aspect initial clair et l'impression en foncé sera obtenue par coloration.

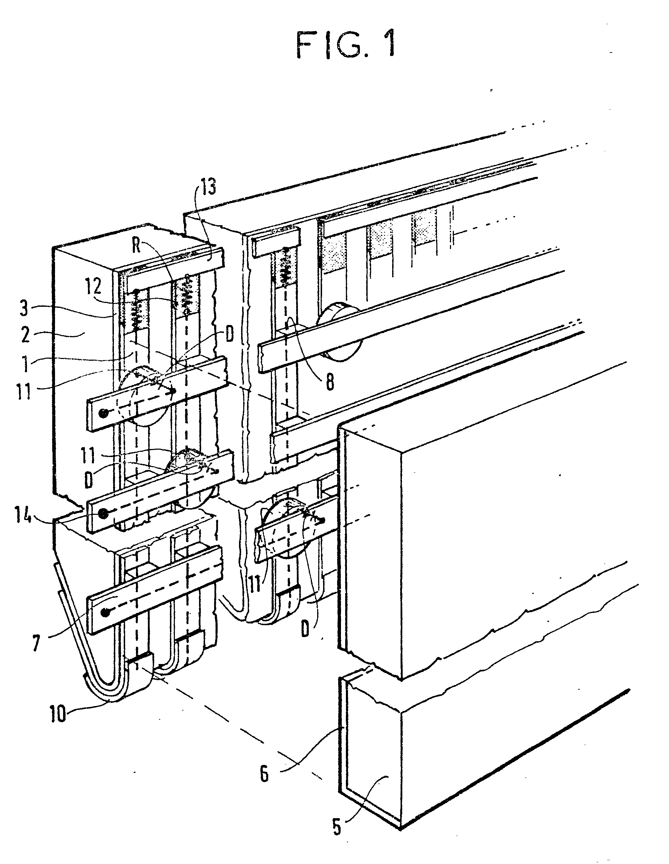

Dans la fig. 1, on a illustré un agencement des éléments constitutifs de la barrette d'impression. La barrette est constituée par un premier réseau de rubans conducteurs 1, parallèles et isolés les uns des autres. Une première extrémité 10 de chaque ruban 1 est recouverte d'une couche de matériau choisi en fonction du type de papier utilisé, par exemple est recouverte d'argent. Cette extrémité 10 est la partie terminale du ruban 1 ou une partie intermédiaire au niveau d'un pliage du ruban 1. L'extrémité 10 forme un stylet d'impression désigné ci-après sous cette même référence 10. Les rubans conducteurs 1 seront au nombre de 1728; les 1728 stylets 10 s'étendent régulièrement sur 216 mm. Les rubans conducteurs 1 sont portés par un support 2, par l'intermédiaire d'une plaquette isolante 3. Le support 2 est isolant et rigide; il sera par exemple en verre ou en plastique injecté. Ce support, d'au moins 216 mm de longueur, est de forme appropriée: il a une section sensiblement en forme de trapèze rectangle dont l'angle aigu entre la grande base et le côté adjacent a été arrondi.

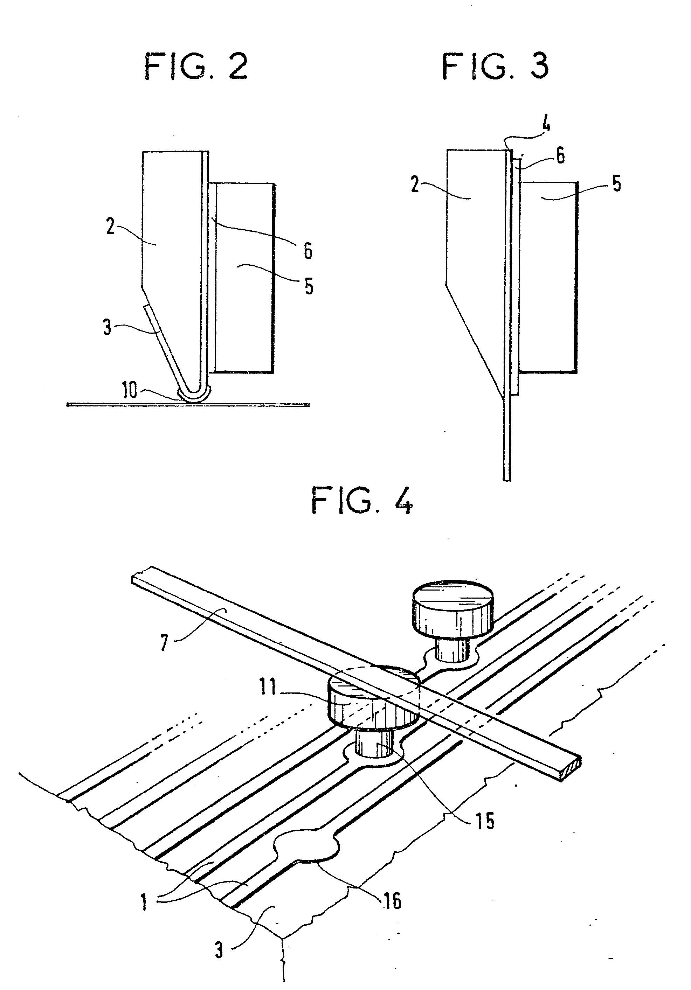

En regard des fig. 1 et 2, on voit que le support 2, à pointe arrondie, est en partie recouvert par la plaquette souple et isolante 3. Cette plaquette 3 est solidarisée au support, par exemple par collage. Elle s'étend sur la longueur du support en recouvrant la grande base de sa section et débordant au-delà de la pointe arrondie.

En variante illustrée dans la fig. 3, le support 2 a en section la forme d'un trapèze rectangle, à pointe non arrondie. Il est, en partie, recouvert par une plaquette 4 rigide et isolante. Cette plaquette est solidarisée au support, par exemple par collage. Elle s'étend sur toute sa longueur, sur le bord formant la grande base de sa section, et vient déborder au-delà de la pointe du support.

Dans ces deux réalisations fig. 1 et 2 et fig. 3, le support et la plaquette qui portent les rubans conducteurs (non illustrés fig. 2 et 3) doivent permettre par leur forme de réaliser, entre tous les stylets (au niveau de la pointe arrondie ou au niveau de l'extrémité libre de la plaquette rigide) et la surface du papier, des contacts localisés suivant une ligne.

Le premier réseau de rubans conducteurs 1 est réalisé sur la plaquette 3 (4) suivant une technique proche de celle utilisée pour la constitution des circuits imprimés. Par exemple, ce premier réseau sera réalisé en utilisant des techniques de masquage et de photogravure. On peut également recouvrir totalement une des faces de la plaquette d'un film conducteur et procéder par attaques partielles du film conducteur pour le seul maintien de pistes conductrices constituant alors les rubans 1. Les rubans 1 portés par la plaquette sont en partie, au niveau de leur extrémité 10, recouverts d'argent pour constituer après assemblage de la plaquette sur le support, les stylets respectifs. En variante, les rubans 1 peuvent initialement contenir un pourcentage d'argent pour éviter cet apport supplémentaire d'argent au niveau des extrémités formant les stylets.

La barrette d'impression comporte un circuit d'adressage des stylets. Ce circuit d'adressage est intégré dans la barrette.

En regard des fig. 1, 2 et de la fig. 3, on voit que la barrette comporte un deuxième support 5, en matériau analogue à celui du support 2. Ce deuxième support 6 est de section rectangulaire. Une de ses grandes faces est recouverte d'une plaquette isolante et souple 6. Cette plaquette 6 est solidarisée au support 5, par exemple par collage. Cette plaquette 6 porte un deuxième réseau de rubans conducteurs 7 visibles dans la seule fig. 1. Ce deuxième réseau de rubans conducteurs 7 est réalisé de manière analogue au premier réseau de rubans conducteurs 1.

Les rubans conducteus 7 du deuxième réseau sont au nombre de seize. Ils sont parallèles entre eux et isolés électriquement les uns des autres. Ils s'étendent sur la longueur du deuxième support et sa plaquette, soit au moins sur 216 mm. Les deux réseaux de rubans conducteurs 1 et 7 sont orthogonaux. Les supports 2 et 5 étant assemblés l'un à l'autre, les rubans conducteurs étant intérieurs, les conducteurs 1 et 7 constituent une matrice à lignes formées par les rubans 7 et colonnes formées par les rubans 1. Les lignes désignées par la même référence 7 et les colonnes désignées par la même référence 1 sont isolées les unes des autres par une couche de colle isolante 8 déposée au moins au niveau de chacune des intersections entre les lignes et colonnes, exception faite de certaines intersections ainsi qu'il sera vu ci-après. Cette colle isolante 8 assure également l'assemblage des deux supports 2 et 5 équipés.

L'isolation précédente aux intersections peut, bien entendu, être obtenue par une couche de vernis isolant ou une feuille intercalaire en matériau isolant, par exemple en matériau connu sous la dénomination Mylar, la feuille étant perforée convenablement pour maintenir libres d'isolation les intersections souhaitées. L'assemblage des supports 2 et 5 équipés peut alors être assuré au moyen d'une colle isolante par exemple insérée entre les lignes et/ou les colonnes, ou par un moyen purement mécanique.

Pour la constitution du circuit d'adressage des stylets 10, on voit, dans la fig. 1, que chaque ruban conducteur 1 porte une pièce semi-conductrice 11. Ces pièces semi-conductrices 11 sont étagées en hauteur sur la barrette: seize pièces semi-conductrices successives 11 sont étagées régulièrement sensiblement sur la hauteur de la barrette et sont disposées respectivement en regard des seize rubans conducteurs 7 avec lesquels elles sont en contact électrique. Cette même disposition est conservée pour les pièces semi-conductrices suivantes prises par ensembles de seize; ces pièces semi-conductrices sont portées respectivement par les rubans conducteurs 1 divisés par ensembles de seize. Une diode D est ainsi formée entre chaque ruban 1 et un ruban 7.

Chaque ruban conducteur 1 est également en contact électrique avec une couche de matériau résistif 12, par exemple un dépôt de carbone. Ce matériau résistif 12 recouvre la deuxième extrémité de chaque ruban 1 et s'étend sur la plaquette 3, en prolongeant le ruban 1 considéré. Une résistance R est ainsi formée et connectée en série sur chaque ruban 1. Une bande conductrice 13 recouvre les extrémités libres des dépôts résistifs 12 reliés électriquement aux rubans 1 d'un même ensemble (seize rubans 1). Cette bande conductrice 13 sera reliée à une première borne d'alimentation (non illustrée dans cette fig. 1) des stylets 10.

On a schématisé en tiretés le circuit électrique ainsi formé: un ruban 1, donc le stylet 10, est alimenté à partir de la première borne d'alimentation et de la bande 13, à travers la résistance électrique associée R. On remarquera que chaque ensemble de 16 rubans conducteurs 1 a sa propre première borne d'alimentation ou sa propre bande 13, et que, d'un ensemble de seize rubans 1 à un autre ensemble, les premières bornes d'alimentation, ou les bandes telles que 13, sont indépendantes. Le circuit électrique formé comporte également la diode D reliant le ruban conducteur 1 considéré à un ruban conducteur 7 dont l'extrémité libre est avantageusement dorée et constitue une deuxième borne d'alimentation 14. Cette diode D permet ou non de court-circuiter le stylet 10 d'extrémité du ruban 1 considéré à partir de la deuxième borne d'alimentation. On remarquera que dans un ensemble de seize rubans, un ruban donné 1 (colonne) est relié à un ruban donné 7 (ligne) à travers une diode, ce ruban 1 étant isolé des autres rubans 7 par les dépôts 8.

Dans la barrette d'impression ainsi constituée, les rubans conducteurs 1, au nombre de 1728, seront réalisés au pas de 125 µm. Chaque ruban a une largeur de l'ordre de 90 µm; on notera cependant que cette dimension n'est pas critique: on peut la réduire à 30 µm. environ ou l'augmenter jusqu'à 110 µ. Les rubans conducteurs 7, au nombre de seize, seront par exemple au pas de 2 mm. L'épaisseur de la couche de matériau résistant n'est guère critique, sa largeur sera voisine de celle des rubans conducteurs 1. Les pièces en matériau semi-conducteur, en forme de pastille, ont un diamètre de quelques dizièmes de millimètres, par exemple de l'ordre de 0,25 mm.

Dans la fig. 4, on a illustré, à échelle très agrandie, le montage des pièces en matériau semi-conducteur sur les rubans conducteurs 1. La pièce en matériau semi-conducteur 11 a la forme d'une pastille. Pour tenir compte du diamètre de cette pastille semi-conductrice (0,25 mm), de la largeur des rubans conducteurs 1 (ici de l'ordre de 40 µm) et de leur écartement, la pastille semi-conductrice est montée sur le ruban 1 correspondant par l'intermédiaire d'une pointe métallique 15, par exemple en cuivre. A l'emplacement de la diode, le ruban 1 est élargi ainsi que représenté en 16 et présente le cas échéant une métallisation supplémentaire pour la fixation convenable de la pointe 15. La pointe 15 est fixée en 16 au ruban 1 par soudure, ou par collage au moyen d'une colle conductrice, et/ou est maintenue par pression dans la barrette constituée. Le diamètre important de la pastille semi-conductrice par rapport au faible écartement entre rubans conducteurs 1 nécessite, en effet, un report de la pastille du côté des rubans conducteurs 7 dont le pas est suffisant pour éviter tout contact entre la pastille semi-conductrice considérée et les deux rubans 7 adjacents à celui qui lui est relié électriquement.

Bien entendu, les pastilles semi-conductrices 11 peuvent être fixées aux rubans 7 aux emplacements convenables, la jonction électrique avec les rubans respectifs 1 étant assurée par les pointes métalliques 15 maintenues par pression ou fixées sur les rubans 1.

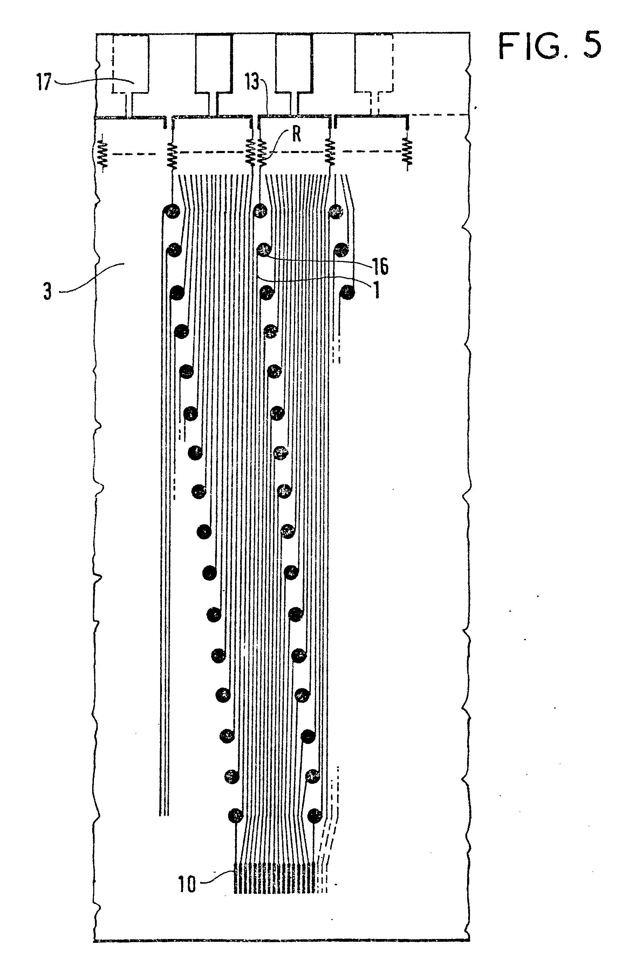

Pour les mêmes considérations, diamètre important des pastilles semi-conductrices et faible écart entre les rubans 1, on adopte, de préférence, pour les rubans 1 une configuration telle que celle représentée dans la fig. 5. Dans cette fig. 5, les emplacements des diodes sur les rubans 1 sont schématisés par de petits cercles noircis désignés par la référence précitée 16. Les rubans 1 portés par la plaquette 3 sont comprimés en dégradé de part et d'autre de ces emplacements 16. Chaque ruban a une largeur de 50 à 80 μm; ils sont espacés l'un de l'autre de 60 à 30 μm. Seize rubans 1 successifs sont ainsi formés sur 2 mm de largeur, en prévoyant sur chaque ruban 1 l'emplacement de dimension maximale 16 pour une diode. Cet emplacement peut avoir 0,3 millimètre de diamètre et peur recevoir directement une pastille semi-conductrice.

En pratique, pour assurer au niveau d'un ensemble de seize rubans 1 une seule jonction conductrice entre un des rubans 1 et un ruban 7, on préfère adopter une configuration des rubans 1 telle que celle représentée dans la fig. 5 et un montage des pastilles semi-conductrices sur les emplacements 16 des rubans 1, par l'intermédiaire d'une pointe métallique 15, ainsi que représenté dans la fig. 4.

Dans cette même fig. 5, bien que les rubans 1 aient été comprimés, on voit que les stylets 10 demeurent régulièrement espacés les uns des autres. On y a également représenté les résistances R respectivement en série avec les rubans 1 et reliées, par ensemble de seize, par la bande 13 à une borne d'alimentation 17 affectée à chaque ensemble.

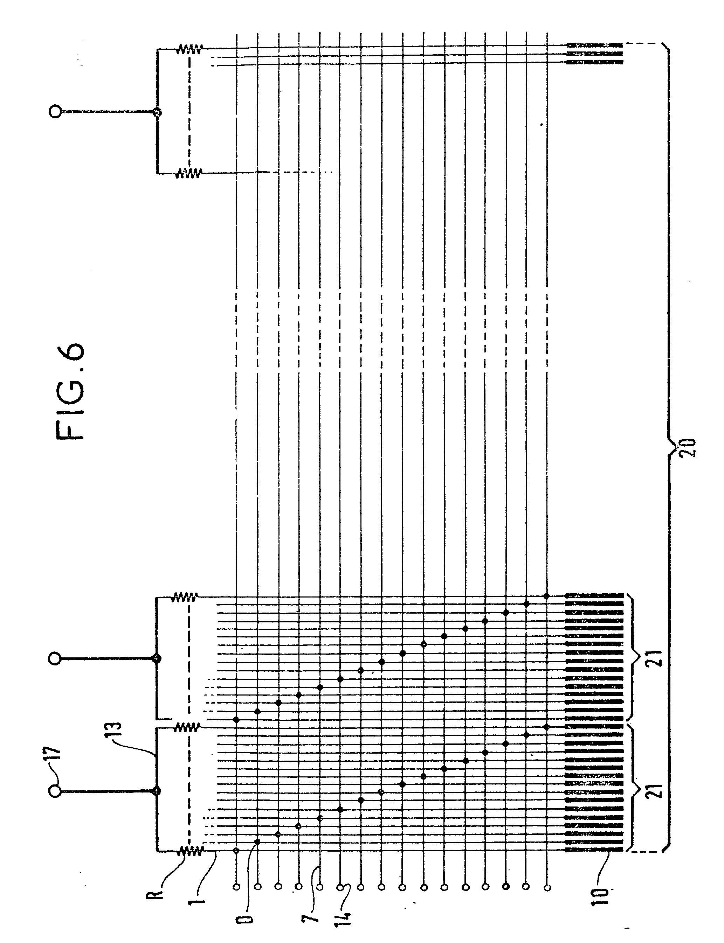

Dans la fig. 6, on a représenté le schéma électrique de la barrette d'impression incluant le circuit d'adressage des stylets 10. La barrette totale est désignée par 20. Le circuit d'adressage qui y est intégré constitue 108 matrices diagonales 21, à diodes D schématisées chacune par un point sur chacune des seize jonctions entre seize colonnes et seize lignes.

Dans chaque matrice, les seize colonnes sont constituées par les rubans conducteurs 1 d'un même ensemble et les seize lignes par les seize rubans conducteurs 7. Les seize colonnes, désignées par la référence 1, sont alimentées respectivement à travers les seize résistances R, à partir de la borne d'alimentation 17 reliée aux résistances par la bande conductrice 13. Les bornes d'alimentation telles que 17 sont indépendantes d'une matrice à une autre. Les seize lignes sont communes aux 108 matrices 21. Chacune des seize lignes relie les diodes portées par les colonnes de même rang appartenant respectivement aux 108 matrices. Elles sont alimentées à partir des bornes d'alimentation 14, ces bornes 14 sont indépendantes les unes des autres et affectées chacune à une ligne.

A titre d'exemple, on indique que la tension appliquée sur l'une des bornes 17 sera de 0 ou 5 volts, celle appliquée sur l'une des bornes 14 sera de 0 ou 5 volts. Le premier stylet de la première matrice 21 devant être commandé pour l'impression d'un point noir, on mettra la borne 17 de cette première matrice sous 5 volts, ainsi que la borne 14 reliée à la première ligne. Les autres bornes telles que 17 alimentant les colonnes des autres matrices, ainsi que les autres bornes 14 reliées aux quinze autres lignes, seront mises à 0 volt. Au niveau de cette première matrice les seize colonnes sont sous 5 volts par la borne 17. Cependant, seule la diode D mise sous 5 volts sera bloquée et évitera le passage de courant par la diode: le premier stylet est donc alimenté et le courant dans ce stylet provoque l'impression d'un point noir. Les quinze autres diodes de cette première matrice mises à 0 volt sont passantes: le courant résiduel dans ces quinze stylets, dû à la tension de saturation des diodes, est très insuffisant pour provoquer une impression. Au niveau des autres matrices toutes les diodes disposées sur la première ligne considérée sont sous 5 volts, ceci reste cependant sans effet puisque les colonnes des autres matrices sont portées à 0 volt: les stylets des autres matrices ne sont pas alimentés. Les diodes permettent ou non de court-circuiter les stylets d'une même matrice, indépendamment les uns des autres. Les diodes permettent également de sélectionner une seule matrice parmi les 108 matrices existantes.

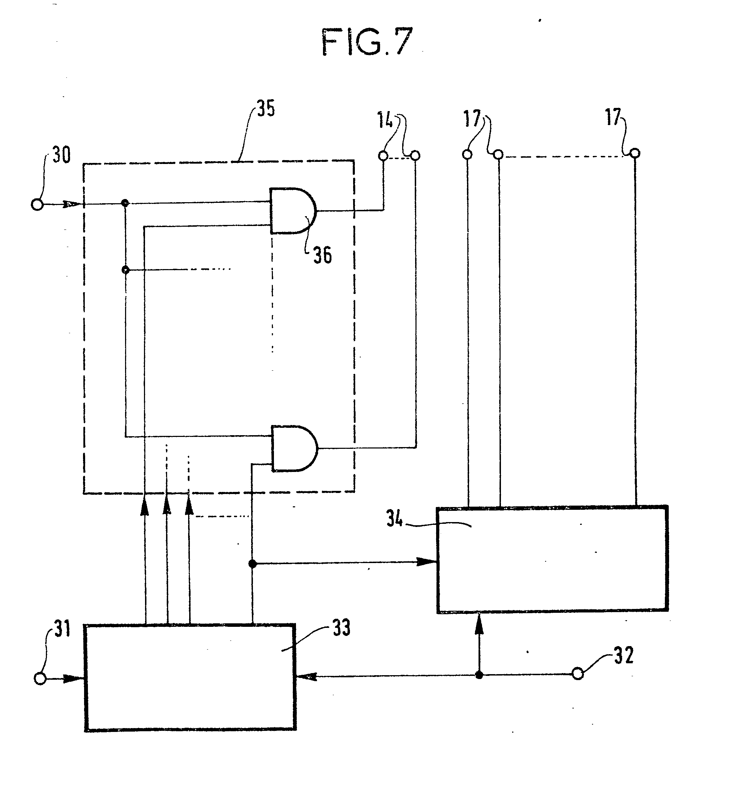

Dans la fig. 7, on a schématisé un mode de réalisation d'un circuit de commande du circuit d'adressage.

On a représenté ce circuit de commande ayant deux entrées de commande. L'une des entrées 30 reçoit le signal d'information pour l'impression d'une ligne, composé d'impulsions de niveau logique 0 (0 volt) pour l'impression d'un point blanc (stylet adressé mais non commandé), ou de niveau logique 1 (5 volts) pour l'impression d'un point noir (stylet adressé et commandé c'est-à-dire traversé par un courant). L'entrée 31 reçoit des impulsions d'horloge au rythme de l'impression des points le long d'une ligne de balayage du papier. Le signal d'information et le signal d'horloge sont synchrones. Une troisième entrée du circuit 32 reçoit le signal de synchronisation de début de ligne de balayage.

Le circuit de commande des 108 matrices 21 comporte un compteur par 16, 33, connecté à l'entrée 31 recevant le signal d'horloge. Un compteur par 108, 34, est relié à la sortie de rang 16 du compteur 33. Il a 108 sorties reliées respectivement aux 108 premières bornes d'alimentation 17 des 108 matrices pour permettre leur alimentation successivement.

Les seize sorties du compteur 33 sont reliées à un circuit logique combinatoire 35 recevant le signal d'information de l'entrée 30. Ce circuit logique 35 comporte seize portes ET telles que 36, recevant d'une part en parallèle le signal d'information issu de l'entrée 30 et reliées d'autre part respectivement aux seize sorties du compteur 33. Les sorties des seize portes ET 36 sont reliées respectivement aux seize deuxièmes bornes d'alimentation 14 des 108 matrices d'adressage des stylets.

En fonctionnement, le signal de synchronisation de début de ligne assure une mise forcée du compteur par 108, 34, à l'état 1, par exemple sur la détection de fin de ce signal. La première matrice 21 a ses seize colonnes mises sous 5 volts. Ce même signal issu de la borne 32 assure une mise forcée à zéro du compteur par 16, 33. Les impulsions d'horloge, qui suivent ce signal de synchronisation de ligne, font progresser l'état du compteur par 16 pour la commande des portes ET 36 qui sont donc successivement passantes pour le signal d'information. Pour l'état 1 du compteur 33, l'impulsion correspondante du signal d'information étant au niveau 1 (point noir), la première ligne des 108 matrices sera mise sous 5 volts, les autres lignes étant à 0 volt. Le premier stylet inscrit un point noir. Pour ce même état 1 du compteur 33, l'impulsion correspondante du signal d'information étant au niveau 0 (point blanc), la première ligne et les autres lignes des matrices sont à 0 volt: le premier stylet n'inscrit rien (l'aspect blanc du papier est maintenu en ce point). L'adressage des stylets et leur alimentation sont ainsi assurés successivement.

La présente invention a été décrite en regard d'exemples chiffrés particuliers ainsi qu'en regard d'une application particulière pour l'impression d'un papier choisi à aspect initial clair. Il est évident que ces exemples ne peuvent conduire à une limitation de la portée de l'invention.

Il est également évident que les modes d'organisation des rubans conducteurs illustrés et décrits ont été chosis à titre d'exemples et que l'on peut y apporter toute modification de détail permettant d'obtenir les fonctions recherchées, sans sortir du cadre de cette invention. En particulier, on notera qu'il est possible d'effectuer le dépôt des couches résistives 12 sur la plaquette 6 aux emplacements convenables pour venir en contact avec les rubans conducteurs 1 respectifs et les bandes 13 respectives. Les bandes 13 peuvent également être formées sur la plaquette 6.

**Revendications**

1. Barrette d'impression d'une image sur un papier sensible, par balayage selon des lignes successives, comportant une pluralité de stylets d'impression (10) alignés sur la longueur d'une ligne de balayage, et comportant n matrices carrées (21), pour l'adressage des stylets, formées par un premier réseau de conducteurs électriques (1) isolés les uns des autres et divisés en n ensembles identiques, appelés colonnes des matrices, reliés respectivement aux stylets et alimentés à travers des résistances individuelles (R) à partir de premières bornes d'alimentation (17) respectivement affectées aux n matrices, et par un deuxième réseau de conducteurs électriques (7) isolés les uns des autres, perpendiculaire au premier réseau et dont les conducteurs en nombre égal à ceux de chaque ensemble du premier réseau, appelés lignes des matrices, sont alimentés à partir de deuxièmes bornes d'alimentation (14), respectivement affectées aux lignes et sont connectés sélectivement aux colonnes par l'intermédiaire de diodes à semi-conducteur (D) pour former lesdites n matrices, caractérisée en ce que les conducteurs électriques (1, 7) du premier réseau et du deuxième réseau sont constitués par des rubans conducteurs (1, 7) formés respectivement sur une première plaquette isolante (3, 4) et une deuxième plaquette isolante (6), disposés intérieurement aux plaquettes assemblées et isolés les uns des autres aux intersections entre rubans conducteurs à l'exception des connexions sélectives pour former chacune desdites matrices, et en ce que, dans chaque matrice (21) lesdites résistances (R) sont formées chacune par une couche de matériau résistif (12) déposée sur l'une des plaquettes et venant relier chacune des colonnes de la matrice considérée à une même bande conductrice (13) formée sur l'une des plaquettes, isolée des rubans de cette plaquette et liée électriquement à la première borne (17) affectée à cette matrice, et les diodes sont formées chacune par une pastille de matériau semi-conducteur (11) montée sur l'un des deux rubans définissant la ligne et la colonne considérées aux niveau de leur intersection.

2. Barrette d'impression selon la revendication 1, caractérisée en ce que lesdits rubans conducteurs (1) dudit premier réseau sont comprimés en dégradé selon l'implantation desdites diodes, pour assurer, au niveau du contact électrique entre l'une des diodes (D) et le ruban conducteur correspondant du premier réseau, un écartement maximal entre ce ruban conducteur et chacun des deux rubans conducteurs adjacents de ce même premier réseau.

3. Barrette d'impression selon l'une des revendications 1 ou 2, caractérisée en ce que la pastille (11) de matériau semi-conducteur est montée sur le ruban conducteur correspondant (1) dudit premier réseau par l'intermédiaire d'une pointe métallique (15) assurant la jonction électrique entre la pastille et ce ruban conducteur.

4. Barrette d'impression selon l'une des revendications 1 à 3, caractérisée en ce que ledit premier réseau comporte 1728 rubans conducteurs (1) formant 1728 stylets d'impression (10) et que lesdits rubans conducteurs (1) de ce premier réseau sont divisés en 108 ensembles chacun de 16 rubans conducteurs.

5. Barrette d'impression selon l'une des revendications 1 à 4, caractérisée en ce que lesdits rubans conducteurs sont en un matériau ayant des propriétés catalytiques.

6. Barrette d'impression selon l'une des revendications 1 à 4, caractérisée en ce que ladite première extrémité de chaque ruban conducteur, formant stylet, est recouverte d'un matériau conducteur ayant des propriétés catalytiques.

**Patentansprüche**

1. Zeilendruckkopf zum Aufdrucken eines Bildes auf sensibles Papier mittels Überstreichen von aufeinanderfolgenden Zeilen, mit einer Vielzahl von Druckstempeln (10), die entlang einer abzutastenden Zeile aufgereiht sind, und mit n quadratischen Matrizen (21) zur Adressierung der Stempel, wobei die Matrizen aus einer ersten Schar voneinander isolierter elektrischer Leiter (1), die in n identische Sätze aufgeteilt sind, die Matrizen-Spalten genannt werden und die je mit den Stempeln verbunden sind und über individuelle Widerstände (R) und erste Versorgungsanschlüsse (17), die je einer der n Matrizen zugeordnet sind, mit Strom versorgt werden, und aus einer zweiten Schar voneinander isolierter elektrischer Leiter (7) bestehen, die senkrecht zur ersten Schar angeordnet ist und deren Leiter, deren Anzahl der Leiteranzahl jedes Satzes der ersten Schar gleich ist, die Matrizenzeilen genannt werden, über zweite Versorgungsanschlüsse (14), die je einer Zeile zugeordnet sind, mit Strom versorgt werden, und selektiv mit den Spalten über Halbleiter-Dioden (D) verbunden sind, um die n Matrizen zu bilden, dadurch gekennzeichnet, dass die elektrischen Leiter (1, 7) der ersten Schar und der zweiten Schar aus leitenden Bändern (1, 7) bestehen, die je auf einem ersten Isolierplättchen (3, 4) und einem zweiten Isolierplättchen (6) geformt werden, innen an den montierten Plättchen angebracht sind und voneinander an den Schnittpunkten zwischen leitenden Bändern isoliert sind, mit Ausnahme der selektiven Verbindungen zur Herstellung jeder der Matrizen, und dass in jeder Marix (21) jedem der Widerstände (R) aus einer Schicht Widerstandsmaterial (12) besteht, das auf eines der Plättchen aufgebracht wurde und jede der Spalten der Matrix mit einem gemeinsamen leitenden Band (13) verbindet, das auf einem der Plättchen ausgebildet ist, von den Bändern dieses Plättchens isoliert ist und elektrisch mit dem ersten Anschluss (17), der dieser Matrix zugeordnet ist, verbunden ist, und dass die Dioden je aus einer Scheibe aus Halbleitermaterial (11) gebildet sind, die auf eines der beiden leitenden Bänder aufgebracht sind, welche die Zeile und die Spalte in Höhe ihres Scnittpunkts definieren.

2. Zeilendruckkopf nach Anspruch 1, dadurch gekennzeichnet, dass die leitenden Bänder (1) der ersten Schar stufenweise je nach Lage der Dioden eng benachbart sind, derart, dass sich in Höhe des elektrischen Kontakts zwischen einer der Dioden (D) und dem entsprechenden leitenden Band der ersten Schar ein maximaler Abstand zwischen diesem leitenden Band und jedem der beiden benachbarten leitenden Bänder der gleichen Schar ergibt.

3. Zeilendruckkopf nach einem der Ansprüche 1 oder 2, dadurch gekennzeichnet, dass die Scheibe (11) aus Halbleitermaterial auf dem entsprechenden leitenden Band (1) der ersten Schar über einem Metallstift (15) angeordnet ist, der die elektrische Verbindung zwischen der Scheibe und diesem leitenden Band herstellt.

4. Zeilendruckkopf nach einem der Ansprüche 1 bis 3, dadurch gekennzeichnet, dass die erste Schar 1728 leitende Bänder (1) aufweist, die 1728 Druckstempel (10) bilden und dass die leitenden Bänder dieser ersten Schar in 108 Sätze mit je 16 leitenden Bändern aufgeteilt sind.

5. Zeilendruckkopf nach einem der Ansprüche 1 bis 4, dadurch gekennzeichnet, dass die leitenden Bänder aus einem Material bestehen, das katalytische Eigenschaften aufweist.

6. Zeilendruckkopf nach einem der Ansprüche 1 bis 4, dadurch gekennzeichnet, dass das erste Ende jedes leitenden Bandes, das den Stempel bildet, von einem leitenden Material mit katalytischen Eigenschaften bedeckt ist.

**Claims**

1. A bar for printing an image on a sensitive paper by scanning the paper along successive lines, comprising a plurality of printing styli (10) aligned along the length of the scan line, and comprising n square matrices (21) for addressing the styli, the matrices being formed by a first network of electric conductors (1), which are insulated from one another, are divided into n identical sets, are called matrix columns and are connected respectively to the styli and fed via individual resistors (R) from first feed terminals (17), which are respectively assigned to the n matrices, and by a second network of mutually insulated electric conductors (7) perpendicular to the first network and having as many conductors as there are conductors in each set of the first network, the conductors being called matrix lines and being fed from second feed terminals (14) which are respectively assigned to the lines and are connected selectively to the columns via semi-conductive diodes (D), to form the said n matrices, characterized in that the electric conductors (1, 7) of the first and second network are constituted by conductive tapes (1, 7) formed respectively on a first insulating plate (3, 4) and on a second insulating plate (6), and are disposed on the interior faces of the assembled plates and are isolated from each other at the intersections between conductive tapes except for the selective connections for forming each of the said matrices, and in that in each matrix (21), said resistors (R) are formed each by a layer of resistive material (12) deposited on one of the plates and connecting each of the columns of the matrix to a common conductive strip (13) formed on one of the plates, insulated from the tapes of said plate and electrically connected to the first terminal (17) assigned to that matrix, and the diodes are formed each by a pellet of semi-conductive material (11) mounted on one of the two tapes defining the line and the column respectively at the intersection level.

2. A printing bar according to claim 1, characterized in that the said conductive tapes (1) of the said first network are closely spaced in steps according to the layout of said diodes to provide, at the level of the electric contact between one of the diodes (D) and the corresponding conductive tape of the first network, maximum spacing between this conductive tape and each of the two adjacent conductive tapes of this same first network.

3. A printing bar acording to claim 1 or 2, characterized in that the pellet (11) of semi-conductive material is installed on the corresponding conductive tape (1) of said first network via a metal stub (15) furnishing the electric junction between the pellet and the conductive tape.

4. A printing bar according to claim 1 to 3, characterized in that the said first network comprises 1728 conductive tapes (1) which form 1728 printing styli (10) and that the said conductive tapes (1) of the first network are divided into 108 sets of 16 conductive tapes each.

5. A printing bar according to one of the claims 1 to 4, characterized in that the said conductive tapes are made of material which has catalytic properties.

6. A printing bar according to one of the claims 1 to 4, characterized in that the said first end of each conductive tape which forms a stylus is covered by a conductive material which has catalytic properties.

# FIG. 1

## FIG. 2

## FIG. 3

## FIG. 4

FIG. 5

FIG.6

# FIG.7